# EUROPEAN PATENT APPLICATION

(11) **EP 4 215 342 A1**
(43) Date of publication of application: **26.07.2023**
(21) Application number: 22153014.0
(22) Date of filing: 24.01.2022
(51) Int. Cl.: B29C 64/124, B33Y 10/00, B33Y 30/00, B29C 64/259

(54) **ADDITIVE MANUFACTURING APPARATUS WITH REMOVABLE FRAME-LIKE SPACER FOIL**

(71) Applicant: Sirona Dental Systems GmbH, 64625 Bensheim (DE); DENTSPLY SIRONA Inc., York, PA 17401 (US)
(72) Inventor: Schmidt, Christian, 64625 Bensheim (DE); Schäfer, Andreas, 64668 Rimbach (DE)
(74) Representative: Özer, Alpdeniz

(57) **Abstract**

The present invention relates to an additive manufacturing apparatus (1) for additively manufacturing a component (2) comprising: a resin vat unit (3) which comprises: a reservoir (4) for storing UV-light photocurable resin (5); and a frame assembly (6) holding a UV-transparent window (6-4) at the bottom of the reservoir (4), wherein said UV-transparent window (6-4) includes a UV-transparent plate (6-4a) and a UV-transparent anti-adhesive flexible foil (6-4b); a projection unit (7) for projecting UV-light (8) through the UV-transparent window (6-4) into the reservoir (4); a movable building platform (9) having a surface (9a) onto which said component (2) can be formed through layerwise curing of said resin (5); characterized in that the UV-transparent window (6-4) further includes a removable frame-like spacer foil (6-4c) which has a predetermined thickness and can be removably mounted by means of frame assembly (6) between the UV-transparent plate (6-4a) and the UV-transparent anti-adhesive flexible foil (6-4b) in order to create a plate-foil air gap (6-4d); and at least one air hole (6-2a) for communicating said plate-foil air gap (6-4d) with the atmosphere.

## Description

### TECHNICAL FIELD OF THE INVENTION

The present invention relates to an additive manufacturing apparatus. The present invention more particularly relates to a removable frame-like spacer foil to be used in a UV-transparent window of an additive manufacturing apparatus.

### BACKGROUND ART OF THE INVENTION

In additive manufacturing techniques, such as stereolithography (SLA) or digital light processing (DLP), a three dimensional component is printed layer-by-layer through light-based curing of a liquid printing medium i.e., a photocurable resin, which is selectively cured under the influence of UV radiation. In a commonly known variation of additive manufacturing, the 3D components are preferably pulled by means of a building platform, upside-down out of the photocurable resin in a resin vat. Other variations of additive manufacturing are also known to those skilled in the art.

According to the state of the art, the resin vat has a UV-transparent window which consists of a UV-transparent, anti-adhesive flexible foil (typically made of a fluoropolymer, e.g., FEP, PMP, Teflon AF, or similar) and a mechanically rigid UV-transparent plate such as glass or Plexiglas. In the state of the art the flexible foil rests on the UV-transparent plate under the weight of the photocurable resin.

When exposing the photocurable resin through the UV-transparent window at the bottom of the resin vat, the polymerized layer adheres to the flexible foil and also the building platform. This adhesion to the flexible foil is typically released by a peel-off movement in the Z-direction i.e., in direction orthogonal to the bottom of the resin vat. The prerequisite for this peel-off is that the anti-adhesive flexible foil can detach from the polymerized layer when the polymerized layer is pulled off by means of the building platform. The detachment of the flexible foil can be described as a peeling process, basically in the same way as a foil or a film is peeled off from a rigid surface.

In the state of the art, the flexible foil is generally disposed onto the UV-transparent plate such that the interface between the foil and the UV-transparent plate is maintained open to the atmosphere so that an air gap can be created, and the foil can assume a convex shape during the peeling process.

A problem with the prior art is that the force for peeling off the polymerized layer also depends on the size of the area of the polymerized layer, which is also subject to a size limitation of the polymerizable layer within the optical / mechanical limits of the additive manufacturing apparatus.

### DISCLOSURE OF THE INVENTION

An objective of the present invention is to overcome the above problems of the prior art and provide an additive manufacturing apparatus which enables an application-dependent, user-adjustable air gap for reducing the force necessary for peeling the UV-transparent, anti-adhesive flexible foil from the UV-transparent plate.

This objective has been achieved through the additive manufacturing apparatus as defined in claim 1, and the removable frame-like spacer foil as defined in claim 3. The dependent claims relate to further embodiments and developments.

The present invention provides an additive manufacturing apparatus for additively manufacturing a 3D component. The additive manufacturing apparatus comprises a resin vat unit which has a reservoir for storing UV-light photocurable resin, and a frame assembly holding a UV-transparent window at the bottom of the reservoir, wherein said UV-transparent window includes a UV-transparent plate and a UV-transparent anti-adhesive flexible foil. The additive manufacturing apparatus further comprises a projection unit for projecting UV-light through the UV-transparent window into the reservoir; and a movable building platform having a surface onto which said 3D component can be formed through layerwise curing of the said resin. The UV-transparent window further includes: a removable frame-like spacer foil which has a predetermined thickness and can be removably mounted within the frame assembly between the UV-transparent plate and the UV-transparent anti-adhesive flexible foil in order to create a plate-foil air gap; and at least one air hole for communicating said plate-foil air gap with the atmosphere.

The present invention enables the user to set different spacings between the UV-transparent anti-adhesive flexible foil and the UV-transparent plate inside the UV-transparent window. Basically, this is achieved through the removable frame-like spacer foil in the thickness of the desired spacing. The thickness of removable frame-like spacer foil can be selected accordingly depending on the printing requirements. The user may retrofit the resin vat unit with the removable frame-like spacer foil with the desired thickness.

The resin vat unit can be provided as a unit which can be entirely removed from the additive manufacturing apparatus. Therefore, in a preferred embodiment, the reservoir and the frame assembly including the UV-transparent window are configured to define a detachable resin vat unit which can be detached, for instance pulled out, through a user from the additive manufacturing apparatus. Thereby the user can take the resin vat unit to the outside, for instance, for replenishment. The user may also retrofit the resin vat unit with a frame-like spacer foil with the desired thickness in accordance with the printing requirements after it has been taken out of the additive manufacturing apparatus. Alternatively, the resin vat unit can be provided as a unit which is partly or entirely integrated with the additive manufacturing apparatus.

A major advantageous effect of the present invention is that the adaptation of various spacings between the flexible foil and rigid plate becomes possible for different printing applications, and thus the additive manufacturing, in specific the resin vat unit does not have to be exchanged entirely but only retrofitted with a frame-like spacer foil with the desired thickness. Another major advantageous effect of the present invention is that the peeling forces can be reduced by increasing the thickness of the spacing, thereby also the duration of the overall printing process can be shortened as the peeling process can be speeded-up Another major advantageous effect of the present invention is that the area utilization of the projection area can be comparatively increased within the mechanical limits of the additive manufacturing apparatus by way of using comparatively thicker spacer foils.

### BRIEF DESCRIPTION OF THE DRAWINGS

In the subsequent description, further aspects and advantageous effects of the present invention will be described in more detail by using exemplary embodiments and by referring to the drawings, wherein
Fig. 1 - is a schematic vertical cross-sectional partial view of a stereolithography apparatus according to an embodiment;
Fig. 2 - is a schematic perspective view of an entirely detachable resin vat unit of the stereolithography apparatus according to an embodiment;
Fig. 3 - is a schematic perspective exploded view of the resin vat unit in Fig. 2;
Fig. 4A - is a schematic perspective upper view of an inner frame of the frame assembly of the resin vat unit in Fig. 3;
Fig. 4B - is a schematic perspective lower view of the inner frame in Fig. 4A;
Fig. 5A - is a schematic cross-sectional view of the inner frame in Fig. 4B, taken along the line I-I;
Fig. 5B - is a schematic enlarged view of the detail II in Fig. 5A;
Fig. 6 - is a schematic view of the removable frame-like spacer foil;
Fig. 7 - is a schematic view of the UV-transparent anti-adhesive flexible foil.
   - 1.: Stereolithography apparatus
   - 2.: Component
   - 3.: Resin vat unit
   - 4.: Reservoir
   - 4a.: Aperture
   - 4b.: Grip
   - 5.: UV-light photocurable resin
   - 6.: Frame assembly
   - 6-1.: Inner frame
   - 6-1a.: Inner frame element
   - 6-1b.: Inner frame element
   - 6-1c.: Screw
   - 6-1d.: Screw hole
   - 6-2.: Outer frame
   - 6-2a.: Air hole
   - 6-2b.: Air channel
   - 6-2c.: Hose
   - 6-2d.: Screw
   - 6-2d': Screw
   - 6-2e.: Screw hole
   - 6-2e': Screw hole
   - 6-3.: Sealing
   - 6-4: UV-transparent window
   - 6-4a.: UV-transparent plate
   - 6-4b.: UV-transparent anti-adhesive flexible foil
   - 6-4c.: Removable frame-like spacer foil
   - 6-4d.: Plate-foil air gap
   - 7.: Projection unit
   - 8.: UV-light
   - 9.: Movable building platform
   - 9a.: Surface

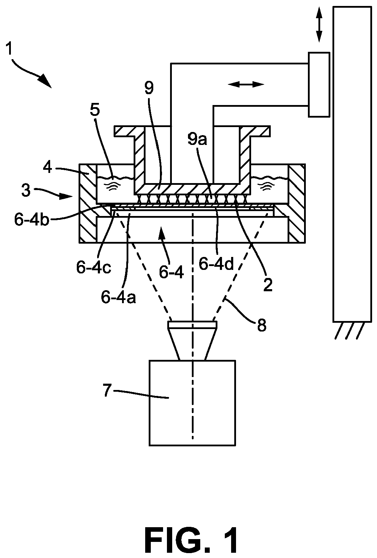

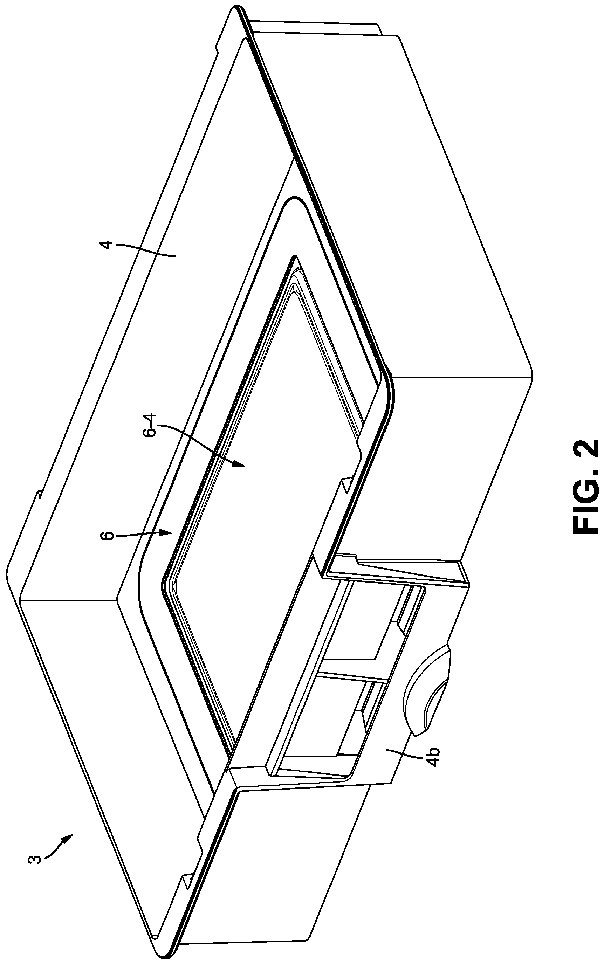

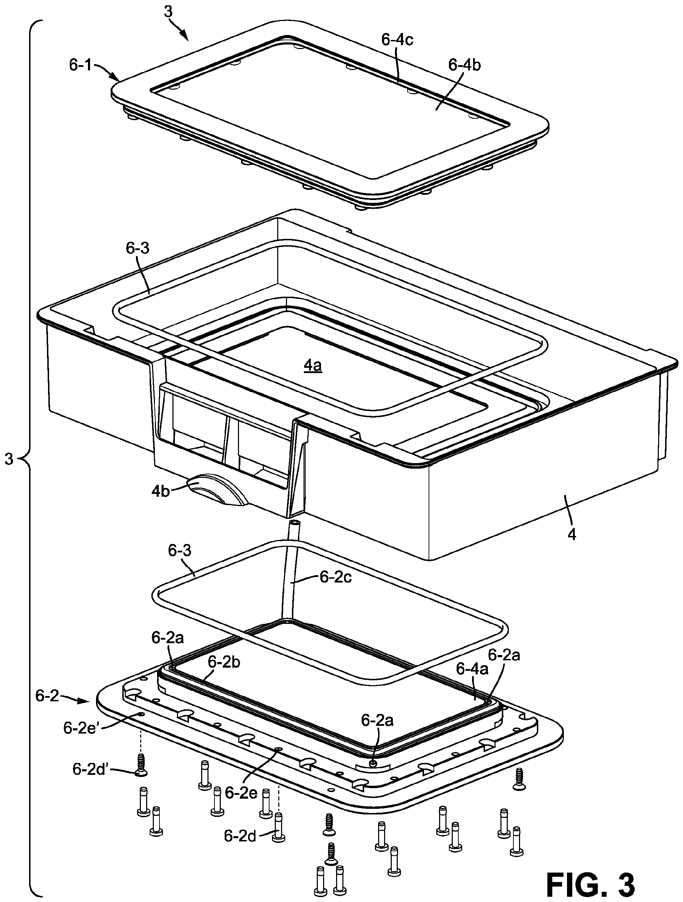

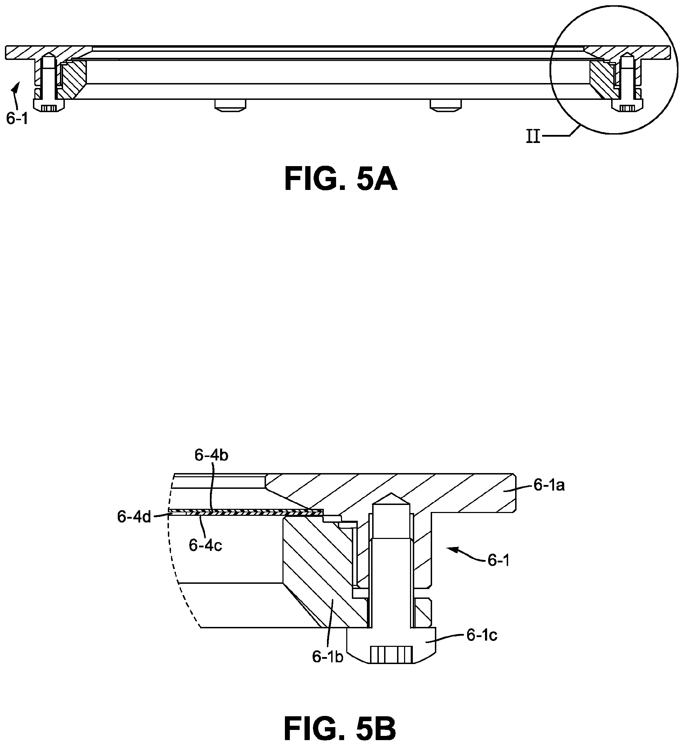

Fig. 1 shows an embodiment of an additive manufacturing apparatus (1) for additively manufacturing a 3D component (2). As shown in Fig. 2, the additive manufacturing apparatus (1) has a resin vat unit (3) which includes a reservoir (4) for storing UV-light photocurable resin (5), and a frame assembly (6) holding a UV-transparent window (6-4) at the bottom of the reservoir (4). As shown in Fig. 1, said UV-transparent window (6-4) includes a UV-transparent plate (6-4a) and a UV-transparent anti-adhesive flexible foil (6-4b). As shown in Fig. 1, the additive manufacturing apparatus (1) has a projection unit (7) for projecting UV-light (8) through the UV-transparent window (6-4) into the reservoir (4). The additive manufacturing apparatus (1) includes a movable building platform (9) that has a surface (9a) facing the bottom of the resin vat unit (3) onto which said 3D component (2) can be formed through layerwise curing of said resin (5) through the projection unit (7). The building platform (9) can be moved into and out of the reservoir (4). The building platform (9) can be also moved sideways within the reservoir (4). As shown in Fig. 1, the UV-transparent window (6-4) further includes a removable frame-like spacer foil (6-4c) which has a predetermined thickness. As shown in more detail in Fig. 5B, the removable frame-like spacer foil (6-4c) can be mounted by means of the frame assembly (6) between the UV-transparent plate (6-4a) and the UV-transparent anti-adhesive flexible foil (6-4b) in order to create a plate-foil air gap (6-4d). The details of the frame assembly (6) will be explained later in more detail. As shown in Fig. 3, the UV-transparent window (6-4) has air holes (6-2a) for communicating said plate-foil air gap (6-4d) with the atmosphere.

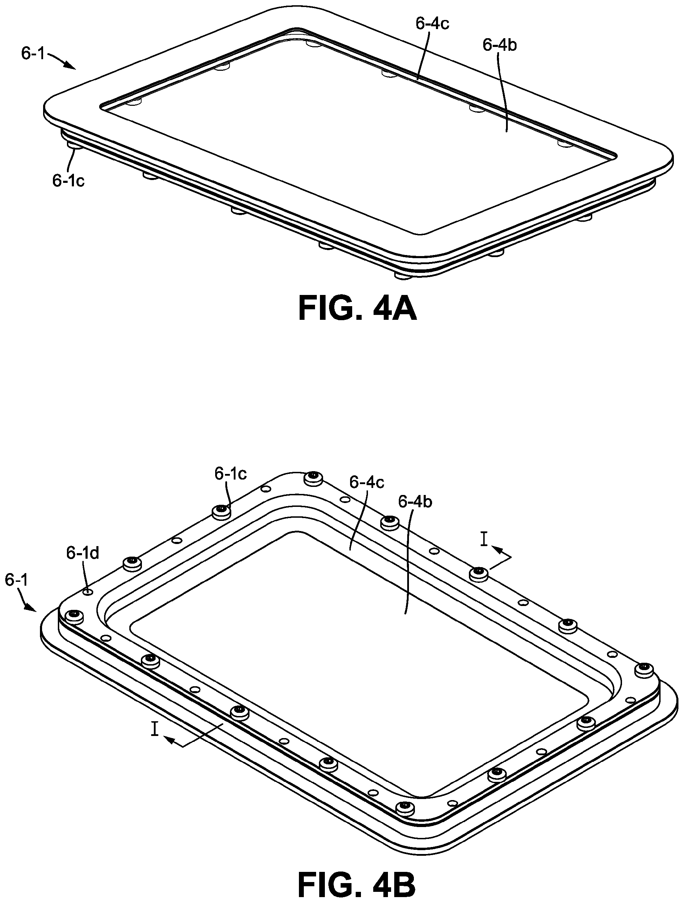

Hereinafter, the frame assembly (6) will be explained in more detail. As shown in Fig. 3, the frame assembly (6) comprises an inner frame (6-1) and an outer frame (6-2) which are respectively mounted on the inner side and the outer side of the aperture (4a) of the resin vat unit (3). A sealing (6-3) is preferably arranged between the interface of the inner frame (6-1) and the resin vat unit (3). Another sealing (6-3) is preferably arranged between the interface of the inner frame (6-1) and the outer frame (6-2). As shown in Fig. 5B, the inner frame (6-1) has two inner frame elements (6-1a; 6-1b) which are attached to each other through the screws (6-1c). The screws (6-1c) can be easily removed by the user to exchange the removable frame-like spacer foil (6-4c). The UV-transparent anti-adhesive flexible foil (6-4b) and the removable frame-like spacer foil (6-4c) are sandwiched/clamped between the two inner frame elements (6-1a; 6-1b). As shown in 5B, a plate-foil air gap (6-4d) is created by means of the frame-like spacer foil (6-4c) above the UV-transparent plate (6-4a) when these are assembled. As shown in Fig. 3, the UV-transparent plate (6-4a) is fixed on the outer frame (6-2) for example with an adhesive. The outer frame (6-2) has an air hole (6-2a) at each corner which are preferably connected with each other through a peripherally running air channel (6-2b). The frame-like spacer foil (6-4c) has a width such that it does not entirely cover the air holes (6-2a) and the air channel (6-2b). The air hole (6-2a) is preferably connected with a hose (6-2c) with the atmosphere. The outer frame (6-2) has screw holes (6-2e) for letting through the screws (6-2d) which are screwed into screw holes (6-1d) (see Fig. 4B). The outer frame (6-2) has also screw holes (6-2e') for letting through the screws (6-2d') which are screwed into screw holes (not shown) on the outer side of the resin vat unit (3). In the assembled state, the frame-like spacer foil (6-4c) is sandwiched between the UV-transparent anti-adhesive flexible foil (6-4b) and the UV-transparent plate (6-4a), and thereby together define the UV-transparent window (6-4a). The weight of the photocurable resin (5) in the resin vat unit (3) causes a deflection of the UV-transparent anti-adhesive flexible foil (6-4b) max. down to the thickness of the frame-like spacer foil (6-4c). Thus, the plate-foil air gap (6-4d) may have a non-uniform shape depending on the tension of the flexible foil (6-4b) and the weight of the photocurable resin (5). The flexible foil (6-4b) may have a purely concave deflection or a partially concave deflection at the periphery in combination with a parallel contact to the UV-transparent plate (6-4a) around the center depending on the tension of the flexible foil (6-4b) and the weight of the photocurable resin (5). The screws (6-2d) can be used also to adjust the tension on the flexible foil (6-4b) when the inner frame (6-1) is clamped to the outer frame (6-2) with the elastic sealing (6-3) located in-between. The tighter the screws (6-2d) are fixed, the higher becomes the tension on the flexible foil (6-4b). As the screws (6-2d) are tightened, the UV-transparent anti-adhesive flexible foil (6-4b) and frame-like spacer foil (6-4c) are stretched across the UV-transparent plate (6-4a) and accordingly pressed against the latter due to the relative movement of the inner frame (6-1) towards the outer frame (6-2).

In an embodiment, the reservoir (4) and the frame assembly (6) including the UV-transparent window (6-4) are configured to define a detachable resin vat unit (3) which can be entirely detached trough a user and taken manually out of the additive manufacturing apparatus. In this embodiment, the resin vat unit (3) preferably has a hand grip (4b).

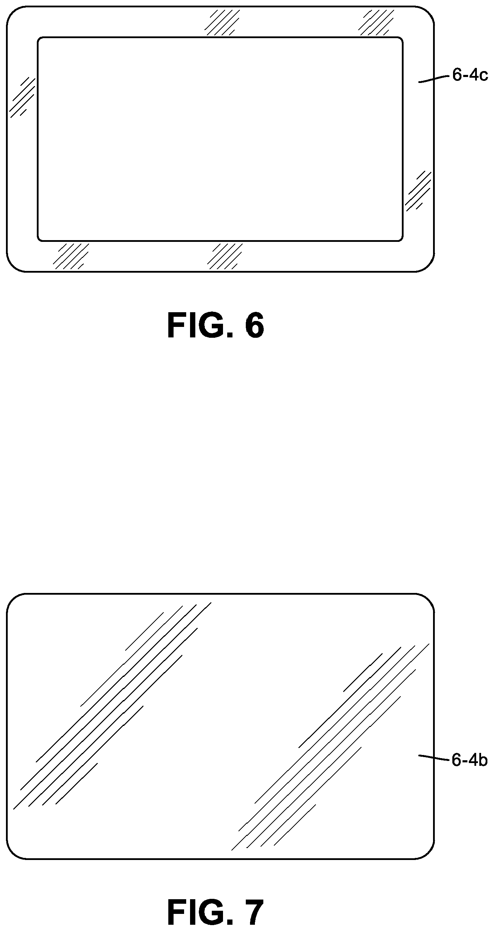

In an embodiment, the removable frame-like spacer foil (6-4c) are preferably provided with a thickness of at least 100 micrometers. Thereby the specific pull-off forces can be reduced below 30N by a 60% area utilization of the available projection foil area of 134.4 mm x 75.6 mm. As shown in Fig. 6, the removable frame-like spacer foil (6-4c) has preferably a rectangular shaped opening in the middle thereof to secure the plate-foil air gap (6-4d) in the assembled state. Fig. 7, shows the UV-transparent anti-adhesive flexible foil (6-4b) which has preferably the same outer contour with the removable frame-like spacer foil (6-4c) in Fig.6. The removable frame-like spacer foil (6-4c) is preferably made of the same material of the UV-transparent anti-adhesive flexible foil (6-4b). Alternatively, it can be produced from a thin metal sheet (Aluminum, steel, etc.) or other sheet like plastic materials.

## Claims

1. An additive manufacturing apparatus (1) for additively manufacturing a component (2) comprising:
a resin vat unit (3) which comprises: a reservoir (4) for storing UV-light photocurable resin (5); and a frame assembly (6) holding a UV-transparent window (6-4) at the bottom of the reservoir (4), wherein said UV-transparent window (6-4) includes a UV-transparent plate (6-4a) and a UV-transparent anti-adhesive flexible foil (6-4b);
a projection unit (7) for projecting UV-light (8) through the UV-transparent window (6-4) into the reservoir (4);
a movable building platform (9) having a surface (9a) onto which said component (2) can be formed through layerwise curing of said resin (5);
**characterized in that**
the UV-transparent window (6-4) further includes a removable frame-like spacer foil (6-4c) which has a predetermined thickness and can be removably mounted by means of frame assembly (6) between the UV-transparent plate (6-4a) and the UV-transparent anti-adhesive flexible foil (6-4b) in order to create a plate-foil air gap (6-4d); and
at least one air hole (6-2a) for communicating said plate-foil air gap (6-4d) with the atmosphere.

2. The additive manufacturing apparatus (1) according to claim 1, **characterized in that** the reservoir (4) and the frame assembly (6) including the UV-transparent window (6-4) are configured to define a detachable resin vat unit (3) which can be detached trough a user from the additive manufacturing apparatus (1).

3. A removable frame-like spacer foil (6-4c) suitable for use in the additive manufacturing apparatus (1) according to claim 1 or 2.

4. The removable frame-like spacer foil (6-4c) according to claim 3, **characterized in that** it has a thickness of at least 100 micrometers.
